# EUROPEAN PATENT APPLICATION

(11) **EP 2 725 665 A1**
(43) Date of publication of application: **30.04.2014**
(21) Application number: 12801924.7
(22) Date of filing: 15.06.2012
(51) Int. Cl.: H01R 31/06

(54) **AUDIO SIGNAL RECEIVER DEVICE, AUDIO SIGNAL TRANSMISSION SYSTEM**

(30) Priority: 22.06.2011 CN 201110169458
(71) Applicant: Tendyron Corporation, Beijing 100083 (CN)
(72) Inventor: LI, Dongsheng, Beijing 100083 (CN)
(74) Representative: Maiwald Patentanwalts GmbH
(86) International application number: PCT/CN2012/077044
(87) International publication number: WO 2012/175005

(57) **Abstract**

An audio signal receiver device and an audio signal transmission system. The system comprises: an audio signal adapter device and the audio signal receiver device. The audio signal adapter device comprises: an audio port and an adapter-end port, where an audio pin of the audio port and an audio signal pin of the adapter-end port are connected, and a ground pin of the audio port and a reference pin of the adapter-end port are connected. The audio signal receiver device comprises: a receiver-end port, a USB physical layer control module, and an audio signal receiver module. The receiver-end port comprises: an audio signal pin and a reference signal pin. The USB physical layer control module comprises a comparator, where a positive pole and a negative pole of the comparator are connected to the audio signal pin and the reference signal pin of the receiver-end port. The audio signal receiver module is connected to an output pin of the comparator and receives a square wave corresponding to an audio signal via the output pin of the comparator.

## Description

### FIELD

The present invention generally relates to an electronic technical field, and more particularly relates to an audio signal receiving device and a system for transmitting an audio signal.

### BACKGROUND

With the development of an audio signal coding/decoding technology, more and more electronic equipments transmitting data via an audio interface are produced. For example, the electronic equipment can be connected with a mobile communication device (such as a mobile phone) via a loudspeaker interface (such as a headphone interface) of the mobile communication device for receiving an audio signal output from the mobile communication device.

Furthermore, with the popularization of a USB interface, a large number of electronic equipments are provided with the USB interface. Thus, how to transmit the audio signal between the mobile communication device and the electronic equipment via the loudspeaker interface of the mobile communication device and the USB interface of the electronic equipment is a technical problem which needs to be solved currently.

An adapter cable for connecting the loudspeaker interface and the USB interface (for example, the adapter cable for connecting a 3.5mm headphone interface and the USB interface) in the prior art can only be connected with a USB master equipment (for example, a personal computer) and a loudspeaker interface equipment (for example, the mobile communication device), such that the loudspeaker interface equipment (for example, the mobile communication device) can communicate with the USB master equipment normally. However, the existing electronic equipments provided with the USB interface are generally USB slave equipments, which cannot communicate with the mobile communication device using the adapter cable for connecting the loudspeaker interface and the USB interface in the prior art.

### SUMMARY

The technical problem to be solved by the present disclosure is to overcome the defects of the prior art, and to provide an audio signal receiving device which can receive an audio signal output from a loudspeaker interface equipment and a system for transmitting an audio signal which can transmit the audio signal between the loudspeaker interface equipment and a USB slave equipment (the audio signal receiving device).

To solve the above problem, the present disclosure provides a system for transmitting an audio signal. The system is configured to receive an audio signal output from an audio signal sending device, and the system comprises an audio signal adapter device and an audio signal receiving device.

The audio signal adapter device comprises an audio interface and an adapter end interface.

The audio interface is connected with the audio signal sending device and has a ground pin and at least one audio pin.

The adapter end interface is connected with the audio signal receiving device and has a first audio signal pin and a first reference signal pin.

The at least one audio pin of the audio interface is connected with the first audio signal pin of the adapter end interface, and the ground pin of the audio interface is connected with the first reference signal pin of the adapter end interface.

The audio signal receiving device comprises a receiving end interface, a USB physical layer control module and an audio signal receiving module.

The receiving end interface has a second audio signal pin and a second reference signal pin.

The USB physical layer control module comprises a comparator, a negative terminal and a positive terminal of the comparator are connected with the second audio signal pin and the second reference signal pin of the receiving end interface respectively.

The audio signal receiving module is connected with an output pin of the comparator, and configured to receive a square wave corresponding to the audio signal via the output pin of the comparator.

The signal sending module is connected with the second reference signal pin of the receiving end interface, and is configured to send a signal to the audio signal sending device by changing a voltage of the second reference signal pin.

Each of the adapter end interface and the receiving end interface is a USB interface, the first audio signal pin is one of a D+ pin and a D- pin of the adapter end interface, and the first reference signal pin is the other one of the D+ pin and the D- pin of the adapter end interface, the second audio signal pin is one of a D+ pin and a D- pin of the receiving end interface, and the second reference signal pin is the other one of the D+ pin and the D- pin of the receiving end interface.

The present disclosure further provides an audio signal receiving device comprising an audio signal receiving module and a receiving end interface. The audio signal receiving device further comprises a USB physical layer control module.

The receiving end interface has an audio signal pin and a reference signal pin.

The USB physical layer control module comprises a comparator, and a positive terminal and a negative terminal of the comparator are connected with the audio signal pin and the reference signal pin of the receiving end interface respectively.

The audio signal receiving module is connected with an output pin of the comparator, and configured to receive a square wave corresponding to an audio signal via the output pin of the comparator.

The receiving end interface is a USB interface, the audio signal pin is one of a D+ pin and a D- pin of the receiving end interface, and the reference signal pin is the other one of the D+ pin and the D- pin of the receiving end interface.

The present disclosure further provides another system for transmitting an audio signal. The system is configured to receive an audio signal output from an audio signal sending device, and the system comprises an audio signal adapter device and an audio signal receiving device.

The audio signal adapter device comprises an audio interface and an adapter end interface.

The audio interface is connected with the audio signal sending device and has a ground pin and at least one audio pin.

The adapter end interface is connected with the audio signal receiving device and has a first audio signal pin and a first reference signal pin.

The at least one audio pin of the audio interface is connected with the first audio signal pin of the adapter end interface, the ground pin of the audio interface is connected with the first reference signal pin of the adapter end interface.

The audio signal receiving device comprises a receiving end interface and a USB physical layer control module.

The receiving end interface has a second audio signal pin and a second reference signal pin.

The USB physical layer control module comprises a comparator and an audio signal receiving module.

A positive terminal and a negative terminal of the comparator are connected with the second audio signal pin and the second reference signal pin respectively.

The audio signal receiving module is connected with an output pin of the comparator, and configured to receive a square wave corresponding to the audio signal via the output pin of the comparator.

Each of the adapter end interface and the receiving end interface is a USB interface, the first audio signal pin is one of a D+ pin and a D- pin of the adapter end interface, and the first reference signal pin is the other one of the D+ pin and the D- pin of the adapter end interface, the second audio signal pin is one of a D+ pin and a D- pin of the receiving end interface, and the second reference signal pin is the other one of the D+ pin and the D- pin of the receiving end interface.

The present disclosure further provides another audio signal receiving device comprising a receiving end interface. The audio signal receiving device further comprises a USB physical layer control module.

The receiving end interface has an audio signal pin and a reference signal pin.

The USB physical layer control module comprises a comparator and an audio signal receiving module, and a positive terminal and a negative terminal of the comparator are connected with the audio signal pin and the reference signal pin of the receiving end interface respectively.

The audio signal receiving module is connected with an output pin of the comparator, and configured to receive a square wave corresponding to an audio signal via the output pin of the comparator.

The receiving end interface is a USB interface, the audio signal pin is one of a D+ pin and a D- pin of the receiving end interface, and the reference signal pin is the other one of the D+ pin and the D- pin of the receiving end interface.

In conclusion, the present disclosure realizes a signal transmitting between the loudspeaker interface equipment and the electronic equipment (the audio signal receiving device) provided with the USB interface with a low cost. In the system for transmitting the audio signal according to the present disclosure, the electronic equipment (the audio signal receiving device) can receive the audio signal via the USB interface, without the need of being provided with a separate loudspeaker interface, thus reducing a cost of the electronic equipment and decreasing a size of the electronic equipment.

### BRIEF DESCRIPTION OF THE DRAWINGS

Fig. 1 is a schematic diagram of an audio signal adapter device according to a first embodiment of the present disclosure;
Fig. 2 is a schematic diagram of an audio signal receiving device according to the first embodiment of the present disclosure;
Fig. 3 is a schematic diagram of an audio signal adapter device according to a second embodiment of the present disclosure;
Fig. 4 is a schematic diagram of an audio signal receiving device according to a third embodiment of the present disclosure.

### DETAILED DESCRIPTION

In the following, the present disclosure will be described in detail with reference to drawings and embodiments.

The audio signal adapter device in the present disclosure may be an audio cable, an audio adapter cable or an audio adapter.

### FIRST EMBODIMENT

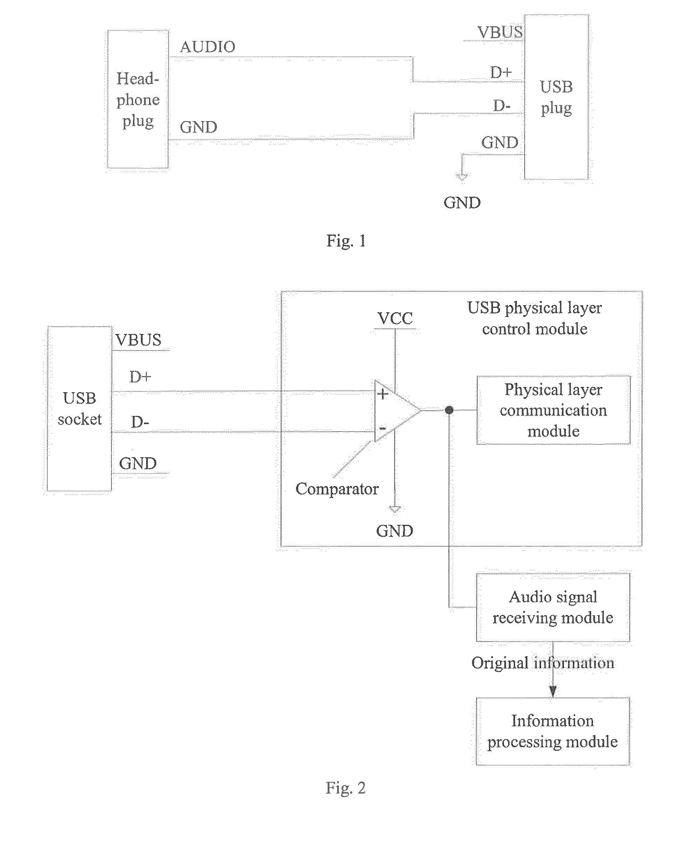

Fig. 1 is a schematic diagram of an audio signal adapter device according to a first embodiment of the present disclosure. As shown in Fig. 1, the audio signal adapter device comprises a loudspeaker interface (such as the headphone plug shown in Fig. 1 or a receiver interface of a telephone) and an adapter end interface (such as the USB plug shown in Fig. 1).

The headphone plug is configured to be connected with a headphone jack of an audio signal sending device (for example, a mobile phone) and to receive an audio signal output from the audio signal sending device.

The headphone plug has an audio pin (such as the AUDIO pin shown in Fig. 1) and a ground pin.

The USB plug is configured to be connected with a USB socket of an audio signal receiving device and to output the audio signal to the audio signal receiving device.

The USB plug has a power pin (VBUS pin), a D+ pin, a D- pin and a ground pin.

In this embodiment, the audio pin of the headphone plug is connected with the D+ pin of the USB plug, and the ground pin of the headphone plug is connected with the D- pin of the USB plug. In other words, in this embodiment, the audio signal adapter device uses the D+ pin of the USB plug as an audio signal pin and uses the D- pin of the USB plug as a reference signal pin so as to output the audio signal to the audio signal receiving device.

When the audio signal adapter device according to the first embodiment of the present disclosure is used for the electronic equipment (the audio signal receiving device), the headphone plug of the audio signal adapter device can be inserted into the headphone jack of the audio signal sending device (for example, the mobile phone), the USB plug/socket of the audio signal adapter device is connected with the USB socket/plug of the electronic equipment, and the audio signal adapter device uses the D+ pin of the plug/socket (collectively referred to as the adapter end interface) as the audio signal pin and uses the D- pin as the reference signal pin so as to receive the audio signal output from the headphone jack of the audio signal sending device and to send the audio signal to the electronic equipment (the audio signal receiving device) connected with the audio signal adapter device.

Fig. 2 is a schematic diagram of an audio signal receiving device according to a first embodiment of the present disclosure. As shown in Fig. 2, the audio signal receiving device comprises a receiving end interface (such as the USB socket shown in Fig. 2), a USB physical layer control module (USB PHY) and an audio signal receiving module.

The USB socket is configured to be connected with the USB plug of the audio signal adapter device and to receive the audio signal output from the audio signal adapter device.

The USB socket has a power pin (VBUS pin), a D+ pin, a D- pin and a ground pin.

The USB physical layer control module is connected with the D+ pin and the D- pin of the USB socket and realizes the control function of the USB protocol physical layer.

The USB physical layer control module comprises a comparator and a physical layer communication module.

A positive terminal and a negative terminal of the comparator are connected with the D+ pin and the D- pin of the USB socket respectively to use the D+ pin of the USB socket as a data signal pin and use the D- pin of the USB socket as a reference signal pin for receiving a data signal transmitted by the D+ pin and the D- pin. A ground pin of the comparator is grounded, a power pin of the comparator is connected with a power supply, and an output pin of the comparator is configured to output a square wave corresponding to the input data signal.

The physical layer communication module is connected with the output pin of the comparator and configured to realize the communication function of the USB protocol physical layer. The detailed structure of the physical layer communication module belongs to the prior art and will be omitted herein.

The audio signal receiving module is connected with the output pin of the comparator and configured to receive the square wave (i.e., the data in binary form) corresponding to the audio data signal output from the comparator.

According to different requirements, the audio signal receiving module may also decode the binary data to obtain the original information (for example, a challenge code for generating a dynamic password or trade information for generating an electronic signature) corresponding to the binary data and to output the original information.

Furthermore, according to different requirements, the audio signal receiving device may also be provided with an information processing module such as a dynamic password generating module and an electronic signature module. The information processing module is configured to receive the original information output from the audio signal receiving module and to process the original information, for example, generating the dynamic password according to the original information (e.g., the challenge code) or generating the electronic signature according to the original information (e.g., the trade information).

The system for transmitting the audio signal according to a first embodiment of the present disclosure comprises the above audio signal adapter device and the above audio signal receiving device.

### SECOND EMBODIMENT

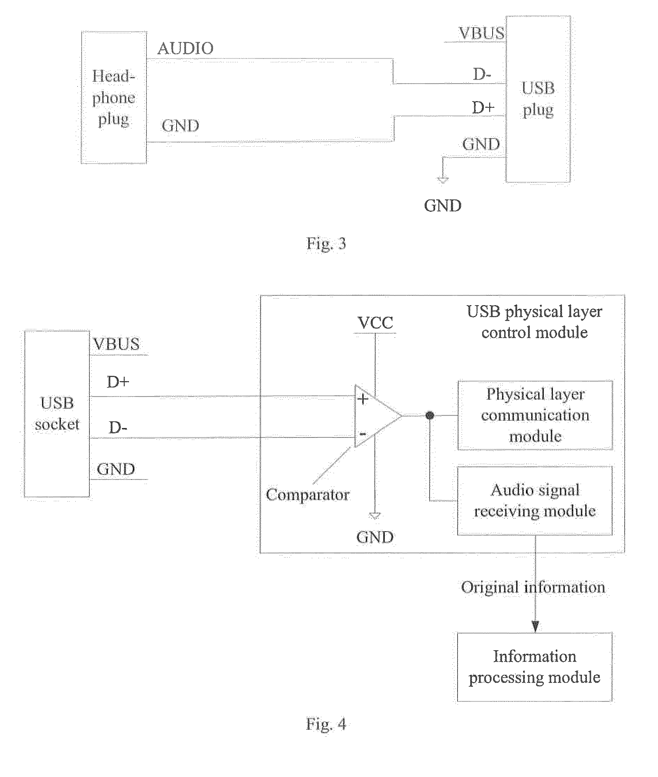

Fig. 3 is a schematic diagram of an audio signal adapter device according to a second embodiment of the present disclosure. As shown in Fig. 3, the differences between the audio signal adapter devices in the second embodiment and that in the first embodiment are as follows.

In the second embodiment, the audio signal adapter device uses the D- pin of the USB plug as the audio signal pin connected with the audio pin of the headphone plug, and uses the D+ pin of the USB pug as the reference signal pin connected with the ground pin of the headphone plug, so as to output the audio signal to the audio signal receiving device.

The audio signal receiving device in the second embodiment is the same as that in the first embodiment.

The system for transmitting the audio signal according to a second embodiment of the present disclosure comprises the above audio signal adapter device and the above audio signal receiving device.

### THIRD EMBODIMENT

The audio signal adapter device in the third embodiment is the same as that in the first embodiment.

Fig. 4 is a schematic diagram of an audio signal receiving device according to a third embodiment of the present disclosure. As shown in Fig. 4, the differences between the audio signal receiving device in the third embodiment and that in the first embodiment are as follows.

In the third embodiment, the audio signal receiving module is disposed in the USB physical layer control module, the audio signal receiving module is connected with the output pin of the comparator of the USB physical layer control module, and configured to receive the square wave (i.e., the binary data) corresponding to the audio signal via the output pin of the comparator.

According to different requirements, the audio signal receiving module may also decode the binary data to obtain the original information (for example, the challenge code for generating the dynamic password or trade information for generating the electronic signature) corresponding to the binary data and to output the original information.

Furthermore, according to different requirements, the audio signal receiving device may also be provided with an information processing module such as a dynamic password generating module and an electronic signature module. The information processing module is configured to receive the original information output from the audio signal receiving module and to process the original information, for example, generating the dynamic password according to the original information (e.g., the challenge code) or generating the electronic signature according to the original information (e.g., the trade information).

The system for transmitting the audio signal according to a third embodiment of the present disclosure comprises the above audio signal adapter device and the above audio signal receiving device.

Furthermore, the audio signal adapter device in the second embodiment may be used in combination with the audio signal receiving device in the third embodiment to form the system for transmitting an audio signal.

Of course, according to the basic principle of the present disclosure, the loudspeaker interface of the audio signal adapter device in the above embodiments may be replaced with other types of audio interfaces having an audio pin (a left-channel pin, a right-channel pin, a mono pin) and a ground pin (a reference signal pin).

Furthermore, the audio interface of the audio signal adapter device may be fixed on the audio signal sending device.

The audio interface of the audio signal adapter device may comprise a plurality of plugs, such as an audio signal plug comprising an audio signal input pin and a MIC plug comprising a MIC pin.

The audio signal receiving device of the present disclosure multiplexes the comparator in the USB physical layer control module, thus reducing the cost. Since the USB protocol signal and the square wave corresponding to the audio signal have different features, it is easy for those skilled in the art to distinguish them by adding corresponding distinguishing logic to the above modules or by the fault-tolerant mechanism in the above modules. For example, since the data format of the square wave does not conform to the USB protocol, the physical layer communication module in the USB physical layer control module will not start the subsequent communication function after receiving the square wave corresponding to the audio signal. The above problem will not influence the functions of the system for transmitting the audio signal according to the present disclosure, the corresponding processing methods of which also belong to the prior art and will be omitted herein.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical layer existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or CD, etc.

Although explanatory embodiments have been shown and described, it would be appreciated by those skilled in the art that the above embodiments cannot be construed to limit the present invention, and changes, alternatives, and modifications can be made in the embodiments without departing from spirit, principles and scope of the present invention.

## Claims

1. A system for transmitting an audio signal, configured to receive an audio signal output from an audio signal sending device and comprising an audio signal adapter device and an audio signal receiving device, wherein
the audio signal adapter device comprises an audio interface and an adapter end interface;
the audio interface is connected with the audio signal sending device and has a ground pin and at least one audio pin;
the adapter end interface is connected with the audio signal receiving device and has a first audio signal pin and a first reference signal pin;
the at least one audio pin of the audio interface is connected with the first audio signal pin of the adapter end interface, the ground pin of the audio interface is connected with the first reference signal pin of the adapter end interface;
the audio signal receiving device comprises a receiving end interface, a USB physical layer control module and an audio signal receiving module;
the receiving end interface has a second audio signal pin and a second reference signal pin;
the USB physical layer control module comprises a comparator, a positive terminal and a negative terminal of the comparator are connected with the second audio signal pin and the second reference signal pin respectively;
the audio signal receiving module is connected with an output pin of the comparator, and configured to receive a square wave corresponding to the audio signal via the output pin of the comparator; and
each of the adapter end interface and the receiving end interface is configured as a USB interface, the first audio signal pin is one of a D+ pin and a D- pin of the adapter end interface, and the first reference signal pin is the other one of the D+ pin and the D- pin of the adapter end interface, the second audio signal pin is one of a D+ pin and a D- pin of the receiving end interface, and the second reference signal pin is the other one of the D+ pin and the D- pin of the receiving end interface.

2. An audio signal receiving device, comprising an audio signal receiving module and a receiving end interface, wherein the audio signal receiving device further comprises a USB physical layer control module,
the receiving end interface has an audio signal pin and a reference signal pin;
the USB physical layer control module comprises a comparator, a positive terminal and a negative terminal of the comparator are connected with the audio signal pin and the reference signal pin of the receiving end interface respectively;
the audio signal receiving module is connected with an output pin of the comparator, and configured to receive a square wave corresponding to an audio signal via the output pin of the comparator;
the receiving end interface is a USB interface, the audio signal pin is one of a D+ pin and a D- pin of the receiving end interface, and the reference signal pin is the other one of the D+ pin and the D- pin of the receiving end interface.

3. A system for transmitting an audio signal, configured to receive an audio signal output from an audio signal sending device and comprising an audio signal adapter device and an audio signal receiving device, wherein
the audio signal adapter device comprises an audio interface and an adapter end interface;
the audio interface is connected with the audio signal sending device and has a ground pin and at least one audio pin;
the adapter end interface is connected with the audio signal receiving device and has a first audio signal pin and a first reference signal pin;
the at least one audio pin of the audio interface is connected with the first audio signal pin of the adapter end interface, the ground pin of the audio interface is connected with the first reference signal pin of the adapter end interface;
the audio signal receiving device comprises a receiving end interface and a USB physical layer control module;
the receiving end interface has a second audio signal pin and a second reference signal pin;
the USB physical layer control module comprises a comparator and an audio signal receiving module;
a positive terminal and a negative terminal of the comparator are connected with the second audio signal pin and the second reference signal pin respectively;
the audio signal receiving module is connected with an output pin of the comparator, and configured to receive a square wave corresponding to the audio signal via the output pin of the comparator; and
each of the adapter end interface and the receiving end interface is a USB interface, the first audio signal pin is one of a D+ pin and a D- pin of the adapter end interface, and the first reference signal pin is the other one of the D+ pin and the D- pin of the adapter end interface, the second audio signal pin is one of a D+ pin and a D- pin of the receiving end interface, and the second reference signal pin is the other one of the D+ pin and the D- pin of the receiving end interface.

4. An audio signal receiving device, comprising a receiving end interface, wherein the audio signal receiving device further comprises a USB physical layer control module,
the receiving end interface has an audio signal pin and a reference signal pin;
the USB physical layer control module comprises a comparator and an audio signal receiving module, a positive terminal and a negative terminal of the comparator are connected with the audio signal pin and the reference signal pin of the receiving end interface respectively;
the audio signal receiving module is connected with an output pin of the comparator, and configured to receive a square wave corresponding to an audio signal via the output pin of the comparator;
the receiving end interface is configured as a USB interface, the audio signal pin is one of a D+ pin and a D- pin of the receiving end interface, and the reference signal pin is the other one of the D+ pin and the D- pin of the receiving end interface.
